# FASCICULE DE BREVET EUROPEEN

(11) **EP 0 911 957 B1**
(45) Date de publication et mention de la délivrance du brevet: **22.09.2004**
(21) Numéro de dépôt: 98811028.4
(22) Date de dépôt: 16.10.1998
(51) Int. Cl.: H02P 7/622

(54) **Moteur asynchrome monophasé à deux enroulements**
Einphasen Asynchronmotor mit zwei Windungen
Single-phase asynchronous motor with two windings

(30) Priorité: 20.10.1997 FR 9713109
(43) Date de publication de la demande: 28.04.1999
(73) Titulaire: SOMFY, 74300 Cluses (FR)
(72) Inventeur: Orsat, Jean-Michel, 74300 Chatillon sur Cluses (FR); Bruno, Serge, 74460 Marnaz (FR)
(74) Mandataire: Meylan, Robert Maurice

(56) Documents cités:
- EP-A- 0 596 472
- DE-A- 4 038 199
- US-A- 4 520 303

## Description

La présente invention concerne un moteur asynchrone à induction monophasé, tel que défini au préambule de la revendication 1.

Un tel moteur est connu du brevet US 4 520 303. Lorsque l'un des interrupteur s'ouvre, le courant dans l'enroulement correspondant à cet interrupteur a tendance à se maintenir en provoquant une surtension aux bornes de ce demi-enroulement, surtension qui se retrouve sur l'autre demi-enroulement en raison du couplage inductif mutuel entre les deux demi-enroulements. On retrouve cette surtension aux bornes de l'interrupteur qui vient de s'ouvrir. Les interrupteurs étant généralement constitués d'éléments semi-conducteurs ne supportant que des tensions limitées, la surtension apparaissant aux bornes des interrupteurs détruit ceux-ci dans la plupart des cas de figure. Habituellement, pour écouler le courant dû à une surtension de coupure dans un bobine, il suffit de brancher parallèlement à cette bobine une diode de roue libre. Toutefois, dans le cas de deux bobinages couplés magnétiquement, une telle diode de roue libre serait vue comme un court-circuit par l'autre bobine. En effet, lorsque cette autre bobine est alimentée, elle sera couplée à une bobine en série avec une diode branchée en direct.

Une solution à ce problème consisterait à utiliser, comme dispositif d'écoulement du courant, une diode transil, c'est-à-dire une diode de type Zener, placée anode côté pôle négatif du pont de diodes et cathode côté demi-enroulements du moteur. Le seuil de conduction inverse de cette diode devrait être supérieur à la tension issue du pont de diodes. Par exemple, pour un moteur de 230 V efficaces, la tension de seuil serait de 600 V. Ce dispositif d'écoulement du courant pourrait agir de la même façon en parallèle à chacun des demi-enroulements. Un tel dispositif d'écoulement du courant devrait être, une fois son seuil défini, dimensionné pour dissiper la puissance calorique résultant du transit du courant sous une tension égale à sa tension de seuil. Pour les petits moteurs, de quelques dizaines de watt, il est possible de trouver des composants d'écoulement, car la puissance à dissiper reste inférieure à 2 watt. Par contre, pour les moteurs plus puissants, de quelques centaines de watt, la puissance à dissiper par le composant d'écoulement devient trop importante et il n'existe pas de composant disponible dans le commerce.

La présente invention a pour but de résoudre le problème présenté ci-dessus pour des moteurs de toutes puissances.

Le moteur asynchrone à induction selon l'invention est défini par la partie caractérisante de la revendication 1.

La valeur limite étant supérieure à la tension d'alimentation, le dispositif de limitation ne constitue pas un court-circuit vu de l'autre demi-enroulement.

Le dispositif de limitation de la tension comprend des composants tels que condensateur et/ou résistance capables d'écouler des courants importants.

Selon le mode d'exécution, il est possible de prévoir un dispositif limiteur de tension pour chaque demi-enroulement ou un seul dispositif limiteur de tension commun aux deux demi-enroulements, l'une des bornes du dispositif étant reliée aux bornes non communes des demi-enroulements par des diodes en opposition de polarité.

Selon un mode d'exécution, le dispositif limiteur de tension est un dispositif court-circuitant le demi-enroulement aux bornes duquel se produit une surtension lors de l'ouverture de l'interrupteur de commutation qui lui est associé. Ce dispositif est constitué par exemple d'un élément à seuil de tension et d'un interrupteur commandé par cet élément à seuil de tension. L'interrupteur est constitué, par exemple, d'un transistor et l'élément à seuil de tension est constitué de la jonction base-émetteur du transistor et d'un diviseur de tension branché en parallèle aux demi-enroulements.

Le dispositif limiteur de tension peut être soit auto-piloté, soit piloté par un contrôleur.

L'adjonction d'un condensateur en parallèle aux demi-enroulements permet d'absorber les pointes de courant lors de la commutation des interrupteurs.

Selon un autre mode d'exécution, le dispositif limiteur de tension est constitué d'une résistance et d'un condensateur en parallèle aux demi-enroulements. Compte tenu de la dissipation de puissance d'un tel mode d'exécution, celui-ci sera généralement réservé aux gros moteurs.

Les dessins annexés représentent, à titre d'exemple, quelques modes d'exécutions du moteur selon l'invention.
La figure 1 est un schéma général d'un moteur selon l'invention, susceptible d'être exécuté de différentes manières.
La figure 2 est une première variante du schéma général de la figure 1.
La figure 3 est une seconde variante du schéma général de la figure 1.
La figure 4 représente le schéma général d'un premier mode d'exécution des dispositifs DAP des figures 1 et 2.
La figure 5 représente un premier exemple d'exécution du schéma général de la figure 4.
La figure 6 représente un second exemple d'exécution du schéma général de la figure 4.
La figure 7 représente un exemple d'exécution du dispositif DP de la figure 3.
La figure 8a représente l'allure de la tension d'alimentation aux bornes de l'enroulement principal DP du moteur.
La figure 8b représente l'allure de la tension vu par le double enroulement auxiliaire dans le cas d'un moteur de faible puissance.
La figure 8c représente l'allure de la tension vu par le double enroulement auxiliaire dans le cas d'un moteur de forte puissance.
La figure 9 représente un autre mode d'exécution du dispositif limiteur de tension aux bornes des interrupteurs.

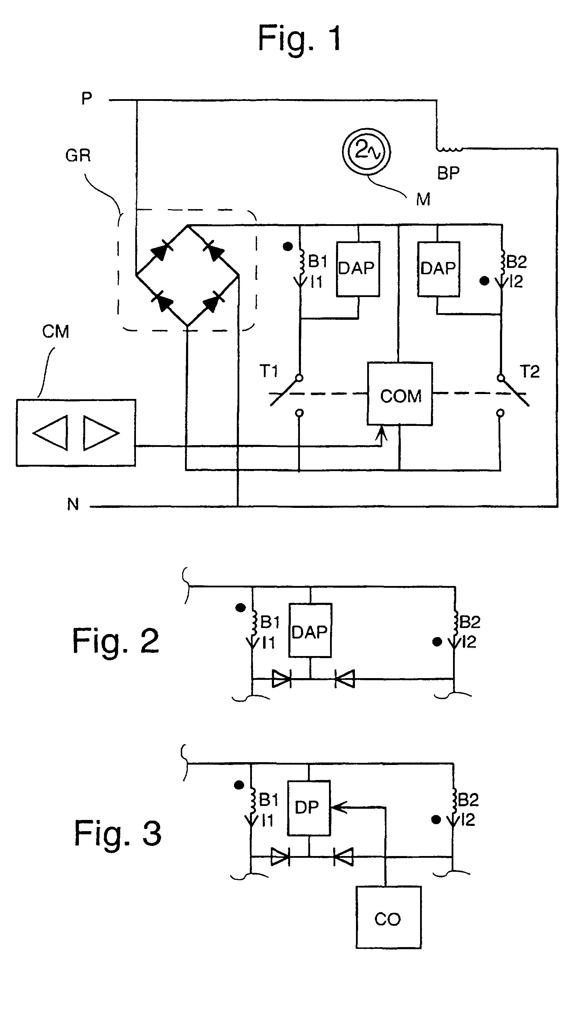

A la figure 1, le moteur M est représenté schématiquement par son enroulement ou bobinage principal BP auquel est appliquée une tension alternative, par exemple celle du secteur désigné par sa phase P et le neutre N, et par ses deux demi-enroulements auxiliaires B1 et B2 bobinés en sens opposés comme indiqué sur le dessin. Les demi-enroulements B1 et B2 sont alimentés alternativement par des courants I1 et I2 traversant les demi-enroulements dans le sens indiqué par les flèches, au moyen d'un circuit redresseur GR à pont de diodes. Le point commun des demi-enroulements B1, B2 est relié à l'un des sorties du pont de diodes et à un circuit de commande COM, tandis que les autres bornes, non communes, des demi-enroulements B1, B2 sont respectivement reliées à l'autre sortie du pont de diodes à travers un interrupteur T1, respectivement T2 commandés par le circuit de commande COM, lequel est également alimenté par le pont de diodes GR. Dans l'exemple représenté, le circuit de commande COM est également relié à une commande manuelle CM permettant de commander la rotation du moteur dans un sens ou dans l'autre. Le circuit de commande COM peut être exécuté de différente manière connue, par exemple comme décrit dans le brevet US 4 520 303.

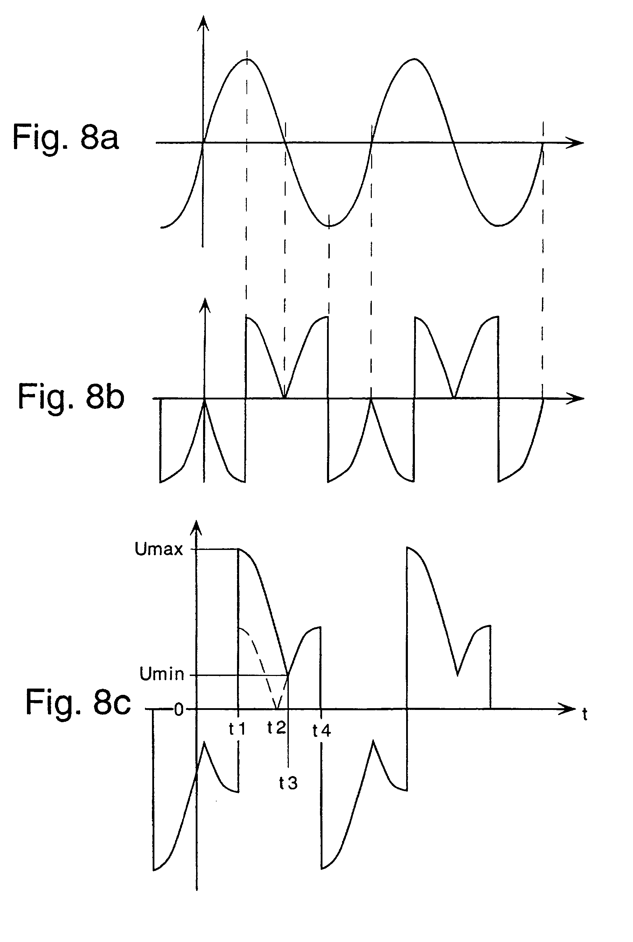

Le circuit de commande COM commande la fermeture/ouverture alternée des interrupteurs T1 et T2 de manière à obtenir, dans les demi-enroulements B1 et B2 un courant dont l'allure de la tension est représentée à la figure 8b, comme ceci est décrit dans le brevet US 4 520 303.

En parallèle à chacun des demi-enroulements B1 et B2 est branché un dispositif auto-piloté DAP assurant la limitation de la tension aux bornes des interrupteurs T1 et T2.

De manière classique, comme représenté à la figure 2, les deux dispositifs auto-pilotés DAP de la figure 1 peuvent être remplacés par un seul dispositif DAP commun aux deux demi-enroulements B1 et B2 en reliant la borne du dispositif DAP non commune aux deux demi-enroulements par deux diodes opposées à ses deux bornes non communes, ces diodes étant conductrices dans le sens des courants I1 et I2.

Au lieu d'un dispositif auto-piloté, il est possible d'utiliser un dispositif limiteur de tension piloté DP, comme représenté à la figure 3, ce dispositif DP étant piloté par un contrôleur CO. Ce contrôleur peut être réalisé de façon classique au moyen d'une mémoire vive, d'une mémoire morte, d'une unité de traitement, d'une horloge et d'interfaces.

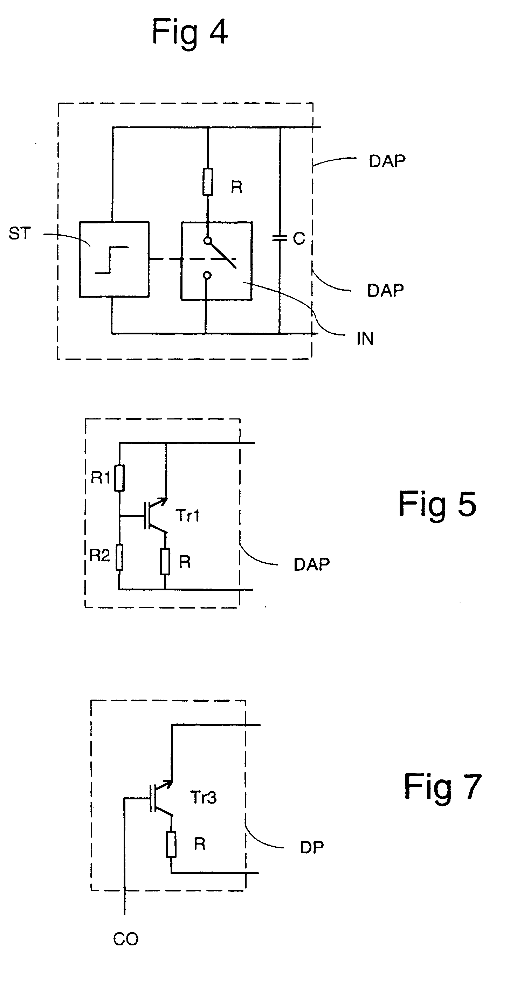

Le dispositif auto-piloté DAP peut être réalisé de différentes manières. De préférence, le dispositif DAP sera réalisé selon le schéma général représenté à la figure 4, c'est-à-dire au moyen d'un élément à seuil de tension ST, d'un interrupteur IN commandé par l'élément à seuil ST et en série avec une résistance R. L'élément à seuil de tension ST déclenche la fermeture ou l'ouverture de l'interrupteur IN selon que le seuil de tension est franchi ou pas. Le seuil de tension est choisi supérieur à la tension d'alimentation. Lorsque l'interrupteur IN se ferme, le demi-enroulement correspondant est court-circuité à travers la résistance R dans laquelle se dissipe l'énergie emmagasinée dans le demi-enroulement.

Lors de chaque commutation de T1, T2, le courant traversant le demi-enroulement dont l'interrupteur vient de s'ouvrir et la résistance R induit dans l'autre demi-enroulement un courant additionnel qui se traduit par une pointe de courant indésirable. Pour pallier cet inconvénient, le dispositif auto-piloté DAP peut être complété par un condensateur C en parallèle aux demi-enroulements, condensateur qui a pour effet d'absorber la pointe de courant. La valeur de ce condensateur est de l'ordre de 1,5 à 2,2 µF.

Un premier mode de réalisation du schéma général représenté à la figure 4 est représenté à la figure 5. L'élément à seuil de tension ST est constitué d'un diviseur de tension formé des résistances R1 et R2. L'interrupteur IN est constitué d'un transistor Tr1 dont la base est reliée au diviseur de tension.

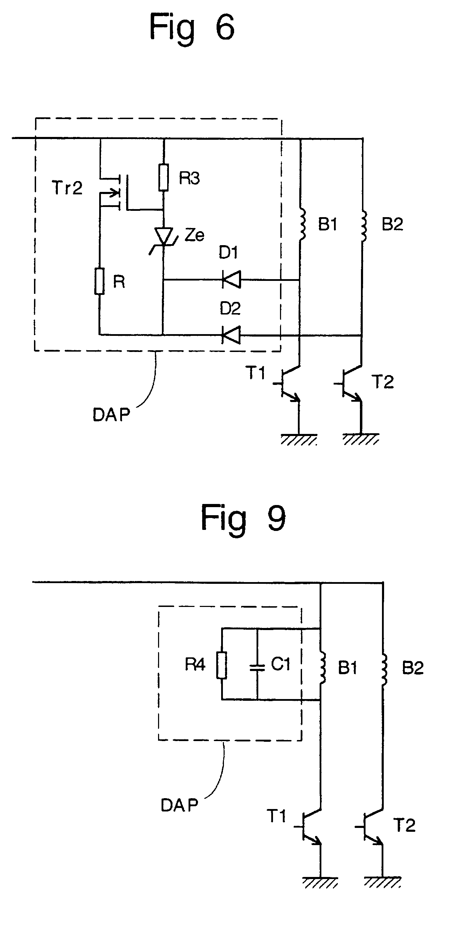

Un autre mode de réalisation du schéma de la figure 4 est représenté à la figure 6. L'élément à seuil de tension ST est constitué d'une diode Zener Ze en série avec une résistance R3 et reliée à chacun des demi-enroulements B1 et B2 à travers une diode D1, respectivement D2 assurant le fonctionnement correct de la diode Zener. L'interrupteur IN est constitué d'un transistor à effet de champs Tr2. Les interrupteurs T1 et T2 sont constitués ici de transistors.

Un exemple d'exécution du dispositif piloté DP de la figure 3 est illustré à la figure 7. Il est constitué simplement d'un transistor Tr3 en série avec la résistance R.

La figure 8c représente l'allure de la tension vue par le double enroulement auxiliaire B1, B2 dans le cas d'un moteur de forte puissance équipé du dispositif limiteur de tension selon l'invention. Umax est la valeur à laquelle la tension aux bornes d'un demi-enroulement est limitée par le dispositif selon l'invention. Umax est supérieur à la tension d'alimentation.

Un effet intéressant ressort du diagramme représenté à la figure 8c dans lequel t1 et t4 sont les instants où à lieux la commutation. On constate que la tension aux bornes d'un demi-enroulement ne descend pas à zéro lors du passage par zéro de la tension d'alimentation, c'est-à-dire au cours d'une demi-alternance de la tension dans le double enroulement auxiliaire. Ceci est dû au fait qu'une partie de l'énergie du demi-enroulement B1, B2 qui vient d'être coupé de l'alimentation est transférée par induction à l'autre demi-enroulement qui vient d'être connecté à l'alimentation. Ce transfert a pour effet de décaler de t2 à t3 le moment où le prochain quart d'alternance alimente ce demi-enroulement et a pour avantage de supprimer le passage par zéro du couple transmis au rotor et par conséquent d'assurer une marche plus silencieuse et de donner au moteur une puissance massique plus élevée que s'il était alimenté selon l'art antérieur.

La figure 9 représente un autre mode d'exécution du dispositif auto-piloté DAP utilisable dans le cas où une dissipation importante de puissance est admissible, par exemple dans le cas de gros moteurs. Le dispositif DAP est simplement constitué d'un condensateur C1 et d'une résistance R4 en parallèle à chacun des demi-enroulements B1 et B2. La valeur du condensateur est de l'ordre de 1,5 µF à 2,2 µF. Une certaine quantité du courant auxiliaire est dissipée dans la résistance R4. Lors d'une brusque augmentation de la tension aux bornes du demi-enroulement B1, le condensateur C1 agit en court-circuit et se charge pour se décharger à travers R4.

## Revendications

1. Moteur asynchrone à induction monophasé, dont le stator est équipé d'un enroulement principal (BP) et d'un enroulement auxiliaire constitué de deux demi-enroulements (B1, B2) bobinés en sens opposés, de telle manière qu'un courant de sens déterminé crée dans ces demi-enroulements des champs magnétiques de sens opposés, l'enroulement principal (BP) étant alimenté directement par une source de courant alternatif, tandis que l'enroulement auxiliaire est alimenté au moyen d'un courant délivré par un redresseur à double alternance (GR) et au moyen de deux interrupteurs de commutation (T1, T2), respectivement en série avec chacun des demi-enroulements auxiliaires, ces interrupteurs étant commandés par un circuit de commande (COM) assurant la fermeture/ouverture alternée des interrupteurs (T1, T2) à une fréquence égale à la fréquence de la tension de l'alimentation, de manière à engendrer dans l'enroulement auxiliaire, une tension alternative déphasée de 90° relativement à la tension dans l'enroulement principal, **caractérisé en ce qu'**il comprend, en parallèle aux deux demi-enroulements, au moins un dispositif (DAP; DP) limitant la tension aux bornes des interrupteurs de commutation (T1,T2), lors de l'ouverture de ces interrupteurs, à une valeur supérieure à la tension d'alimentation, ce dispositif comprenant au moins deux composants (ST, C, R ; Tr1, R1, R2, R ; Tr2, Ze, D1, D2, R ; Tr3, R ; C1, R4) dont un composant (R ; R4) est un composant dissipateur de puissance

2. Moteur selon la revendication 1, **caractérisé en ce qu'**il comprend deux dispositifs limiteurs de tension (DAP), un pour chaque demi-enroulement.

3. Moteur selon la revendication 1, **caractérisé en ce qu'**il comprend un seul dispositif limiteur de tension (DAP, DP) commun aux deux demi-enroulements, l'une des bornes du dispositif étant reliée aux bornes non communes des demi-enroulements par des diodes en opposition de polarité.

4. Moteur selon la revendication 1 ou 2, **caractérisé en ce que** le dispositif limiteur de tension (DAP) est un dispositif (figure 4; figure 5) court-circuitant le demi-enroulement aux bornes duquel se produit une surtension lors de l'ouverture de l'interrupteur de commutation qui lui est associé.

5. Moteur selon l'une des revendications 2 à 4, **caractérisé en ce que** le dispositif limiteur de tension est auto-piloté.

6. Moteur selon la revendication 5, **caractérisé en ce que** le dispositif court-circuitant le demi-enroulement est constitué d'un élément à seuil de tension (ST) et d'un interrupteur (IN) commandé par cet élément à seuil de tension.

7. Moteur selon la revendication 6, **caractérisé en ce que** l'interrupteur est constitué d'un transistor (Tr1) et que l'élément à seuil de tension est constitué de la jonction base-émetteur du transistor et d'un diviseur de tension (R1, R2) branché en parallèle au demi-enroulement.

8. Moteur selon la revendication 6, **caractérisé en ce que** l'interrupteur est constitué d'un transistor (Tr2) et que l'élément à seuil de tension est constitué d'une diode de Zener (Ze).

9. Moteur selon l'une des revendications 2 à 4, **caractérisé en ce que** le dispositif limiteur de tension (DP) est piloté par un contrôleur (CO).

10. Moteur selon la revendication 4, **caractérisé en ce qu'**il comprend en outre un condensateur ( C ) en parallèle avec chacun des demi-enroulements pour l'absorption des pointes de courant lors de la commutation des interrupteurs.

11. Moteur selon la revendication 2, **caractérisé en ce que** le dispositif limiteur de tension est constitué d'une résistance (R4) et d'un condensateur (C1) en parallèle avec chacun des demi-enroulements.

## Patentansprüche

1. Einphasiger Asynchron-Induktionsmotor, dessen Ständer mit einer Hauptwicklung (BP) und mit einer Hilfswicklung versehen ist, welche aus zwei Halbwicklungen (B1, B2) besteht, die im entgegengesetzten Sinne gewikkelt sind, derart, dass ein Strom in einer bestimmten Richtung in den Halbwicklungen magnetische Felder in entgegengesetzten Richtungen erzeugt, wobei die Hauptwicklung (BP) direkt von einer Wechselstromquelle gespeist wird, während die Hilfswicklung mittels eines von einem Zweiweggleichrichter (GR) gelieferten Stroms und mittels zweier Kommutierungsschalter (T1, T2) gespeist wird, die in Reihe mit der einen bzw. der anderen Halbwicklung der Hilfswicklung liegen und von einer Steuerschaltung (COM) gesteuert werden, welche das abwechselnde Schliessen und Öffnen dieser Schalter (T1, T2) mit einer Frequenz bewirkt, die gleich der Frequenz der Speisespannung ist, um in der Hilfswicklung eine Wechselspannung zu erzeugen, die gegenüber der Spannung in der Hauptwicklung um 90° phasenverschoben ist, **dadurch gekennzeichnet, dass** er parallel zu den beiden Halbwicklungen wenigstens eine Vorrichtung (DAP; DP) aufweist, welche die Spannung an den Klemmen der Kommutierungsschalter (T1, T2) beim Öffnen dieser Schalter auf einen Wert begrenzt, der grösser ist als die Speisespannung, und dass diese Vorrichtung wenigstens zwei Bauteile (ST, C, R; Tr1, R1, R2, R; Tr2, Ze, D1, D2, R; Tr3, R; C1, R4) hat, von denen ein Bauteil (R; R4) ein Leistungsverbraucher-Bauteil ist.

2. Motor nach Anspruch 1, **dadurch gekennzeichnet, dass** er zwei Vorrichtungen zur Spannungsbegrenzung (DAP) aufweist, eine für jede Halbwicklung.

3. Motor nach Anspruch 1, **dadurch gekennzeichnet, dass** er eine einzige, für die beiden Halbwicklungen gemeinsame Vorrichtung zur Spannungsbegrenzung (DAP, DP) aufweist, wobei eine der Klemmen der Vorrichtung an die nicht gemeinsamen Klemmen der Halbwicklungen über Dioden entgegengesetzter Polarität angeschlossen ist.

4. Motor nach Anspruch 1 oder 2, **dadurch gekennzeichnet, dass** die Vorrichtung zur Spannungsbegrenzung (DAP) eine Vorrichtung (Figur 4; Figur 5) ist, die die Halbwicklung kurzschliesst, an deren Klemmen beim Öffnen des ihr zugeordneten Kommutierungsschalters eine Überspannung entsteht.

5. Motor nach einem der Ansprüche 2 bis 4, **dadurch gekennzeichnet, dass** die Vorrichtung zur Spannungsbegrenzung selbstgesteuert ist.

6. Motor nach Anspruch 5, **dadurch gekennzeichnet, dass** die die Halbbwicklung kurzschliessende Vorrichtung aus einem Schwellenspannungselement (ST) und einem Schalter (IN) besteht, der von diesem Schwellenspannungselement gesteuert wird.

7. Motor nach Anspruch 6, **dadurch gekennzeichnet, dass** der Schalter aus einem Transistor (Tr1) und das Schwellenspannungselement aus dem Basis-Emitter-Übergang des Transistors und einem Spannungsteiler (R1, R2) besteht, welcher parallel zur Halbwicklung geschaltet ist.

8. Motor nach Anspruch 6, **dadurch gekennzeichnet, dass** der Schalter aus einem Transistor (Tr2) und das Schwellenspannungselement aus einer Zener-Diode (Ze) besteht.

9. Motor nach einem der Ansprüche 2 bis 4, **dadurch gekennzeichnet, dass** die Vorrichtung zur Spannungsbegrenzung (DP) von eine Steuergerät (CO) gesteuert wird.

10. Motor nach Anspruch 4, **dadurch gekennzeichnet, dass** sie ausserdem einen Kondensator (C) aufweist, der parallel zu jeder der Halbwicklungen geschaltet ist, um beim Kommutieren der Schalter Stromspitzen aufzunehmen.

11. Motor nach Anspruch 2, **dadurch gekennzeichnet, dass** die Vorrichtung zur Spannungsbegrenzung aus einem Widerstand (R4) und einem zu jeder der Halbwicklungen parallel geschalteten Kondensator (C1 ) besteht.

## Claims

1. A single-phase asynchronous induction motor whose stator is equipped with a main winding (BP) and with an auxiliary winding which consists of two half-windings (B1, B2) that are wound in opposite directions, so that a current of given direction creates magnetic fields of opposite directions in these half-windings, the main winding (BP) being supplied directly by an alternating current source, while the auxiliary winding is supplied by means of a current delivered by a full-wave rectifier (GR) and by means of two commutating switches (T1, T2), respectively in series with each of the auxiliary half-windings, these switches being controlled by a control circuit (COM) which alternately closes/opens the switches (T1, T2) at a frequency equal to the frequency of the supply voltage, in order to generate, in the auxiliary winding, an alternating voltage phase-shifted by 90 DEG relative to the voltage in the main winding, **characterized in that** it comprises, in parallel with the two half-windings, at least one device (DAP; DP) which limits the voltage across the terminals of the commutating switches (T1, T2), when these switches are opened, to a value higher than the supply voltage, this device having at least two components (ST, C, R; Tr1, R1, R2, R; Tr2, Ze, D1, D2, R; C1, R4), one (R; R4) of these components being a power dissipating component.

2. The motor as claimed in claim 1, **characterized in that** it comprises two voltage limiter devices (DAP), one for each half-winding.

3. The motor as claimed in claim 1, **characterized in that** it comprises a single voltage limiter device (DAP, DP) common to the two half-windings, one of the terminals of the device being connected to those terminals of the half-windings that are not in common via oppositely biased diodes.

4. The motor as claimed in claim 1 or 2, **characterized in that** the voltage limiter device (DAP) is a device (FIG. 4; FIG. 5) which short-circuits the half-winding across whose terminals an overvoltage is produced when its associated commutating switch is opened.

5. The motor as claimed in one of the claims 2 to 4, **characterized in that** the voltage limiter device is self-driven.

6. The motor as claimed in claim 5, **characterized in that** the device which short-circuits the half-winding consists of a voltage-threshold element (ST) and of a switch (IN) which is controlled by this voltage-threshold element.

7. The motor as claimed in claim 6, **characterized in that** the switch consists of a transistor (Tr1), and the voltage-threshold element consists of the base-emitter junction of the transistor and of a voltage divider (R1, R2) connected in parallel with the half-winding.

8. The motor as claimed in claim 6, **characterized in that** the switch consists of a transistor (Tr2), and the voltage-threshold element consists of a Zener diode (Ze).

9. The motor as claimed in one of the claims 2 to 4, **characterized in that** the voltage limiter device (DP) is driven by a controller (CO).

10. The motor as claimed in claim 4, **characterized in that** it comprises a capacitor (C) in parallel with each of the half-windings to absorb the current surges when the switches are operated.

11. The motor as claimed in claim 2, **characterized in that** the voltage limiter device consists of a resistor (R4) and of a capacitor (C1) in parallel with each of the half-windings.
